# EUROPÄISCHE PATENTSCHRIFT

(11) **EP 4 003 821 B1**
(45) Veröffentlichungstag und Bekanntmachung des Hinweises auf die Patenterteilung: **15.02.2023**
(21) Anmeldenummer: 20747392.7
(22) Anmeldetag: 28.07.2020
(51) Int. Cl.: B62D 53/08, B62D 53/12

(54) **KÖNIGSZAPFENANORDNUNG**
KINGPIN ARRANGEMENT
ENSEMBLE PIVOT D'ATTELAGE

(30) Priorität: 29.07.2019 DE 102019120437
(43) Veröffentlichungstag der Anmeldung: 01.06.2022
(73) Patentinhaber: SAF-HOLLAND GmbH, 63856 Bessenbach (DE)
(72) Erfinder: KÖSTER, Mario Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2020/071198
(87) Internationale Veröffentlichungsnummer: WO 2021/018863

(56) Entgegenhaltungen:
- EP-A1- 2 112 008
- DE-A1-102004 024 333
- US-A- 3 428 334
- US-B1- 9 085 208

## Beschreibung

Die Erfindung betrifft eine Königszapfenanordnung mit einem Energieanschluss, insbesondere einem Steckerelement.

Königszapfenanordnungen sind bereits aus dem Stand der Technik bekannt. Diese dienen dazu, eine Zugkraft von einem Anhänger auf eine Sattelkupplungsplatte zu übertragen. Diese Sattelkupplungsplatte ist dabei auf einem den Anhänger ziehenden Fahrzeug montiert. Problematisch bei den aus dem Stand der Technik bekannten Systemen ist jedoch, dass - bedingt durch die rotatorische Bewegung des Zugfahrzeugs und des Anhängers relativ zu einander - schwierig Strom oder sonstige Energie von dem Zugfahrzeug auf den Anhänger zu übertragen.

Die EP 2 112 008 A1 zeigt eine Steckerkonsole (1) für ein Anhängerfahrzeug eines Lastzuges, umfassend einen an einem Lager (2) um ein Kupplungsmittel (3) des Anhängers schwenkbaren Tragrahmen (4) und einen an dem Tragrahmen (4) ortsfest angeordneten Stecker (5).

Es ist daher Aufgabe der Erfindung eine Königszapfenanordnung bereitzustellen, welche eine sichere Energieübertragung ermöglicht.

Diese Aufgabe wird mit einer Königszapfenanordnung gemäß Anspruch 1 gelöst. Bevorzugte Ausführungsformen, Merkmale und/oder Vorteile ergeben sich aus den Unteransprüchen, der Beschreibung sowie aus den Figuren.

Die Erfindung betrifft eine Königszapfenanordnung zum Anordnen an einem Anhänger, insbesondere einem Nutzfahrzeuganhänger, umfassend einen Königszapfen, einen Rotor und einen Stator, wobei der Königszapfen sich in einer Erstreckungsrichtung erstreckt, wobei der Stator insbesondere rotationsfest zum Königszapfen angeordnet ist, wobei der Rotor einen Energieanschluss, insbesondere einen Steckverbinder, aufweist, wobei der Steckverbinder vorteilhafterweise dazu ausgelegt ist, mit einem komplementär ausgebildeten Steckerelement eines Zugfahrzeugs verbindbar oder verbunden zu sein, wobei der Stator zumindest einen Anschluss aufweist, wobei der Anschluss zumindest in einem eingebauten Zustand mit einem Verteilernetz des Anhängers verbunden ist, wobei der Anschluss über eine Energieübertragungsvorrichtung mit dem Steckverbinder energieleitend, insbesondere elektrisch leitend, verbunden ist, wobei der Rotor relativ zum Stator frei drehbar um eine Rotationsachse ist. Die erfindungsgemäße Königszapfenanordnung dient dazu, an einem Anhänger, insbesondere einem Nutzfahrzeuganhänger, angeordnet zu sein. Die erfindungsgemäße Königszapfenanordnung verfügt über einen Königszapfen, welcher dazu ausgelegt ist, in eine Sattelkupplungsanordnung eines Zugfahrzeugs einkuppelbar bzw. einfahrbar zu sein, sodass Zugkräfte von dem Zugfahrzeug über den Königszapfen auf den Anhänger bzw. den Nutzfahrzeuganhänger übertragen werden können. Der Königszapfen erstreckt sich dabei in eine Erstreckungsrichtung und ist bevorzugt zumindest teilweise rotationssymmetrisch um diese Erstreckungsrichtung ausgebildet. Ein Nutzfahrzeuganhänger im Sinne der Erfindung ist insbesondere ein Anhänger, welcher eine zulässige Gesamtmasse von mindestens 5,01 t, bevorzugt von mindestens 7,51 t und besonders bevorzugt von mindestens 15,01 t und besonders stark bevorzugt von mindestens 30 t aufweist. Die erfindungsgemäße Königszapfenanordnung verfügt über einen Rotor und einen Stator, wobei der Rotor bevorzugt mittel- und/oder unmittelbar am Stator gelagert ist, um eine möglichst kompakte Königszapfenanordnung zu erreichen. Der Stator der Königszapfenanordnung ist bevorzugt derart in Relation zum Königszapfen angeordnet, sodass dieser sich relativ zum Königszapfen nicht verdrehen kann. In anderen Worten kann dies bedeuten, dass der Stator allenfalls translatorisch in Relation zum Königszapfen bewegbar gelagert sein kann. Vorteilhafterweise ist jedoch der Stator auch derart gelagert, dass dieser keine translatorische Bewegung relativ zum Königszapfen ausführen kann. Der Stator der Königszapfenanordnung ist über zumindest einen Anschluss energieleitend, insbesondere elektrisch leitend, mit einem Energienetz, insbesondere einem Verteilernetz, des Anhängers verbunden. In anderen Worten kann dies bedeuten, dass der Anschluss des Stators dazu dient, einen Energiefluss vom Stator in den Anhänger bzw. in dessen Verteilernetz zu realisieren. Bevorzugt kann der Stator rotationsstarr an einem Anhänger mittel oder unmittelbar festgelegt sein. Alternativ bevorzugt kann der Stator jedoch auch rotationsfähig am Anhänger festgelegt sein. Beispielsweise kann der Anschluss durch eine elektrische Leitung gebildet sein, welche aus dem Stator herausgeführt ist und mit dem Verteilernetz eines Anhängers verbunden ist. Alternativ oder zusätzlich bevorzugt kann der Anschluss auch durch einen pneumatischen Anschluss gebildet sein. Der Stator kann nicht nur über einen Anschluss, sondern über eine Vielzahl von Anschlüssen verfügen. Der Rotor der Königszapfenanordnung hingegen ist rotatorisch zum Stator gelagert, insbesondere mittel- und/oder unmittelbar rotatorisch am Stator. Insbesondere sind der Rotor und der Stator allerdings derart relativ zu einander gelagert, dass diese keine translatorische Bewegung zu einander ausführen können. Alternativ oder zusätzlich bevorzugt sind der Stator und der Rotor an demselben Fahrzeug, insbesondere dem Zugfahrzeug oder dem Anhänger, gelagert. In anderen Worten leiten der Stator und der Rotor daher ihre Lagerkräfte insbesondere in dasselbe Fahrzeug ab. Der Rotor kann rotationsstarr zu dem Königszapfen angeordnet sein oder rotierbar, insbesondere um die Erstreckungsrichtung des Königszapfens, in Relation zum Königszapfen gelagert sein. Hierdurch kann eine besonders mechanisch belastbare Lagerung des Rotors erfolgen. Entscheidend ist, dass der Rotor relativ zum Stator rotierbar gelagert ist und dass der Stator grundlegend dazu ausgelegt ist, die energetische Verbindung zum Netz des Anhängers herzustellen und der Rotor grundlegend dazu ausgelegt ist, die energetische Verbindung zum Netz des Zugfahrzeugs herzustellen. Der Rotor weist hierzu einen Energieanschluss auf. Der Rotor kann dabei jedoch nicht nur über einen Energieanschluss verfügen sondern vorteilhafterweise übe eine Vielzahl von Energieanschlüssen. Dieser Energieanschluss kann beispielsweise ein Kabel sein, welches in den oder an dem Rotor geführt ist. Besonders bevorzugt ist der Energieanschluss jedoch zumindest teilweise durch einen Steckverbinder gebildet, dieser kann beispielsweise an einem Tragarm des Rotors befestigt sein. Der Steckverbinder ist insbesondere dazu ausgelegt, mit einem komplementär ausgebildeten Steckerelement eines Zugfahrzeugs verbindbar oder verbunden zu sein. In anderen Worten dient der Steckverbinder insbesondere dazu, eine energieleitende Verbindung mit einem Zugfahrzeug eingehen bzw. bereitstellen zu können. Das komplementär ausgebildete Steckelement des Zugfahrzeugs kann ortsfest am Zugfahrzeug angeordnet sein und/oder beispielsweise durch ein Steckelement an einem Ende einer beispielsweise losen Strom- und/oder pneumatischen Leitung ausgebildet sein. Entscheidend ist dabei, dass der Energieanschluss, insbesondere das Steckelement, mit einem Verteilernetz eines Zugfahrzeugs mittelbar und/oder unmittelbar verbunden sein soll oder verbindbar ist, sodass Energie vom Zugfahrzeug in den Energieanschluss des Rotors fließen bzw. abfließen kann. Der Energieanschluss, insbesondere der Steckverbinder, des Rotors ist über eine Energieübertragungsvorrichtung energieleitend, insbesondere zumindest elektrisch leitend, mit dem Anschluss des Stators verbunden. Hierdurch kann eine gewisse Energieleitung in einem eingesteckten Zustand vom Zugfahrzeug in den Anhänger und umgekehrt über die Königszapfenanordnung erfolgen. Der Rotor der Königszapfenanordnung ist derart gelagert, dass dieser relativ zum Stator frei drehbar um eine Rotationsachse ist. Frei drehbar bedeutet insbesondere, dass der Rotor relativ zum Stator um mindestens 180° drehbar zum Stator ist, bevorzugt zumindest um 360° und besonders stark bevorzugt komplett frei drehbar. Unter komplett frei drehbar ist dabei zu verstehen, dass theoretisch der Rotor relativ zum Stator um die Rotationsachse unendlich häufig drehbar ist. Durch die freie Drehbarkeit des Rotors relativ zum Stator ermöglicht die erfindungsgemäße Königszapfenanordnung eine sichere Energieübertragung auch während einer Drehbewegung zwischen Anhänger und Zugfahrzeug, wie dies beispielsweise bei Kurvenfahrten oder beim An- oder Abkuppeln der Fall sein kann.

Bevorzugt ist die Rotationsachse koaxial zu der Erstreckungsrichtung des Königszapfens. Hierdurch wird eine besonders kompakte Königszapfenanordnung erreicht. Besonders bevorzugt ist die Rotationsachse nicht nur koaxial, sondern auch fluchtend mit der Erstreckungsrichtung des Königszapfens, hierdurch kann eine besonders gute Drehbewegbarkeit erreicht werden, denn insbesondere bei Kurvenfahrten dreht der Anhänger in Relation zum Zugfahrzeug um die Königszapfenerstreckungsrichtung, sodass keinerlei Längenausgleich vorgenommen werden muss, um die energieleitende Übertragung zwischen Zugfahrzeug und Anhänger vornehmen zu müssen. Daher ist diese Art der Anordnung bzw. Ausgestaltung der Königszapfenanordnung nicht nur kompakt, sondern auch besonders kostengünstig.

Vorteilhafterweise ist der Rotor, insbesondere in Relation zum Stator, unverschieblich in die Richtung der Rotationsachse und/oder senkrecht zu der Richtung der Rotationsachse, insbesondere am Stator, gelagert. Durch diese Unverschieblichkeit des Rotors resultiert eine besonders einfache und mechanisch belastbare Lagerung. Alternativ bevorzugt kann der Rotor auch in einem gewissen Maß, insbesondere ± 3 cm, verschieblich in die Richtung der Rotationsachse und/oder senkrecht zu der Richtung der Rotationsachse, insbesondere in Relation zum Stator, gelagert sein. Hierdurch kann ein gewisser Ausgleich erfolgen. Dies ist insbesondere dann vorteilhaft, wenn das Steckelement des Zugfahrzeugs fest gelagert ist und somit eine gewisse Ausgleichsbewegung durch die Königszapfenanordnung erfolgen muss. Beispielsweise kann der Rotor generell gleitgelagert sein. Hierdurch resultiert eine besonders bauraumsparende Anordnung. Alternativ bevorzugt kann der Rotor auch wälzgelagert sein, hierdurch wird insbesondere die auftretende Reibung reduziert.

Zweckmäßigerweise weist der Energieanschluss, insbesondere der Steckverbinder, eine Vielzahl von elektrischen Kontakten auf, wobei der Anschluss eine Vielzahl von elektrischen Verbindern aufweist, wobei jeweils ein Kontakt elektrisch leitend mit einem elektrischen Verbinder verbunden ist. Durch diese exakte Zuordnung genau eines elektrischen Kontakts des Energieanschlusses, insbesondere des Steckverbinders, mit einem elektrischen Verbinder des Anschlusses kann erreicht werden, dass insbesondere Fehlfunktionen und/oder Störungen in der Energieübertragungsvorrichtung leicht detektiert bzw. bestimmt werden können. Darüber hinaus kann durch diese Art der Anordnung auch sichergestellt werden, dass insbesondere gewisse Komponenten durch das Ausfallen bzw. durch eine Beschädigung eines Teils der Energieübertragungsvorrichtung nicht durch einen zu hohen Stromfluss beschädigt werden können.

Bevorzugt weist der Rotor oder der Stator zumindest einen Stromabnehmer, insbesondere einen Bürstenabnehmer, auf, wobei der Stator oder der Rotor zumindest einen Schleifring aufweist, wobei der Stromabnehmer elektrisch leitend den Schleifring mittelbar und/oder unmittelbar kontaktiert, wobei der Schleifring relativ zum Stromabnehmer frei drehbar ist. In anderen Worten kann dies bedeuten, dass der Rotor ein Stromabnehmer aufweist, welcher elektrisch leitend einen in dem Stator angeordneten Schleifring derart mittel- und/oder unmittelbar kontaktiert, sodass über diesen Schleifkontakt eine leitende Verbindung zwischen dem Rotor und dem Stator erreicht wird. Alternativ kann jedoch auch der Stromabnehmer im Stator angeordnet sein und der Schleifring einen Teil des Rotors ausbilden. Durch den Schleifring und durch den Stromabnehmer wird eine besonders hohe Flexibilität des Rotors in Relation zum Stator erreicht. Insbesondere ist es hierdurch möglich, dass der Stator relativ zum Rotor komplett frei drehbar um eine Rotationsachse ist.

In einer bevorzugten Ausführungsform kontaktiert jeder Schleifring zumindest zwei Stromabnehmer, welche vorteilhafterweise diametral gegenüberliegend angeordnet sind, elektrisch leitend mittel- und/oder unmittelbar. Durch das Vorsehen von mindestens zwei Stromabnehmern, welche jeweils einen Schleifring mittel- und/oder unmittelbar elektrisch kontaktieren, kann erreicht werden, dass zumindest eine gewisse Redundanz des Systems eingeführt wird. Darüber hinaus weist diese Doppelkontaktierung bzw. das Vorsehen von zumindest zwei Stromabnehmern pro Schleifring auch noch den Vorteil auf, dass der gesamte elektrische Widerstand durch das Vorsehen zweier kontaktierender Stromabnehmer reduziert wird. Dies hat zur unmittelbaren Folge, dass höhere Stromstärken sicher übertragen werden können. Durch das diametral gegenüberliegende Anordnen der Stromabnehmer kann erreicht werden, dass die gesamt resultierende Kraft durch die Kontakte sich gegenseitig auslöschen oder zumindest reduziert wird, sodass keine bzw. nur geringe Kräfte aufgenommen werden müssen. Vorteilhafterweise sind die Stromabnehmer und/oder die Schleifringe jeweils federnd gelagert, um eine möglicherweise im Betrieb sich ergebende Unwucht der Schleifringe ausgleichen zu können.

Vorteilhafterweise kontaktiert der bzw. die Stromabnehmer den Schleifring jeweils radial außen mittel- und/oder unmittelbar elektrisch leitend. Durch dieses Anordnen der Stromabnehmer an einer radial nach außen weisenden Fläche des Schleifrings kann eine besonders einfache Anordnung erfolgen, die darüber hinaus auch noch besonders kostengünstig ist. Darüber hinaus kann durch diese Art der Anordnung auch noch erreicht werden, dass der Schleifring besonders klein gehalten werden kann. Alternativ bevorzugt kann der Stromabnehmer oder die Stromabnehmer auch radial innerhalb des Schleifrings angeordnet sein. Durch dieses Anordnen des Stromabnehmers innerhalb des Schleifrings resultiert eine Anordnung, welche insbesondere vor äußeren Einflüssen geschützter ist.

Zweckmäßigerweise kontaktiert der Stromabnehmer bzw. die Stromabnehmer den Schleifring an einer Schleifringfläche, dessen Normale parallel zur Rotationsachse ist. In anderen Worten kann dies bedeuten, dass die Schleifringfläche in einer Ebene liegt, dessen Normale parallel zur Rotationsachse ist. Hierdurch kann eine besondere bauraumsparende Anordnung in Richtung der Rotationsachse erreicht werden.

Vorteilhafterweise liegt der Mittelpunkt des Schleifrings, insbesondere aller Schleifringe, auf der Rotationsachse. Durch das Anordnen des Mittelpunkts des Schleifrings auf der Rotationsachse kann eine besonders einfache Lagerung der gesamten Rotoranordnung und/oder Statoranordnung erfolgen. Der Mittelpunkt des Schleifrings ist insbesondere der Schwerpunkt des Schleifrings und/oder derjenige Punkt, um welchen herum der Schleifring rotationssymmetrisch aufgebaut ist.

Vorteilhafterweise weist die Königszapfenanordnung eine Vielzahl von Schleifringen auf, wobei die Schleifringe koaxial zueinander sind. Durch das Vorsehen einer Vielzahl von Schleifringen kann eine Vielzahl von verschiedenen elektrischen Strömen und/oder Spannungen zwischen dem Stator und dem Rotor energieleitend übertragen werden. Durch das koaxiale Anordnung dieser verschiedenen Schleifringe zueinander kann sichergestellt werden bzw. erreicht werden, dass alle diese Schleifringe um dieselbe Achse ausgebildet sind, sodass eine besonders kostengünstige und einfache Ausbildung des Rotors resultiert.

In einer bevorzugten Ausführungsform liegen die Mittelpunkte der Schleifringe auf der Rotationsachse, und wobei die Schleifringe axial und/oder radial zur Rotationsachse angeordnet sind. Durch das Anordnen der Mittelpunkte der Schleifringe auf der Rotationsachse kann sichergestellt werden, dass für eine Kontaktierung der Stromabnehmer mit den jeweiligen Schleifring keinerlei längenversatzausgleichende Mittel vorgesehen werden müssen, sodass eine besonders kostengünstige Königszapfenanordnung resultiert. Unter axial zur Rotationsachse angeordneten Schleifringen ist zu verstehen, dass diese übereinander in Rotationsrichtung angeordnet sind. Hierdurch kann beispielsweise erreicht werden, dass alle Schleifringe dieselbe Dimensionierung aufweisen können, sodass hierdurch Kosten bei der Herstellung und der Wartung bzw. der Reparatur der Königszapfenanordnung gespart werden können. Bei einer Anordnung der Schleifringe derart, dass diese radial zur Rotationsachse angeordnet sind, kann eine besonders bauraumsparende Königszapfenanordnung entlang der Rotationsachse erreicht werden. Dies ist insbesondere deshalb besonders vorteilhaft, da bei Sattelzugaufliegern im Bereich des Königszapfens nur ein geringer Bauraum vorhanden ist.

Vorteilhafterweise weist der Rotor ein umgebendes Gehäuse auf, wobei zweckmäßigerweise auch der Stator ein Gehäuse aufweist. Durch das Anordnen eines Gehäuses um den Rotor bzw. durch das Vorsehen eines umgebenden Rotorgehäuses kann ein Eingreifen in den Rotor verhindert werden, sodass hierdurch die Verletzungsgefahr reduziert wird. Besonders bevorzugt ist es, wenn auch der Stator ein insbesondere mehrteiliges Gehäuse aufweist. Vorteilhafterweise sind das Rotorgehäuse und das Statorgehäuse derart relativ zueinander positioniert, sodass der zwischen den Gehäusen liegende Spalt eine Freidrehbarkeit erlaubt, und insbesondere gleichzeitig ein Eingreifen in die rotierenden bzw. energieleitenden Teile verhindert. Dies kann beispielsweise dadurch geschehen, dass der Spalt zwischen Rotor- und dem Statorgehäuse bzw. zwischen den Gehäuseteilen einen maximalen Spalt von 1 mm, bevorzugt von 0,5 mm und besonders stark bevorzugt von 0,1 mm aufweist. Alternativ oder zusätzlich bevorzugt kann in diesem Spalten auch eine Dichtung vorgesehen sein, um beispielsweise das Eindringen von Feuchtigkeit und/oder Verschmutzung zu verhindern. Eine solche Dichtung kann insbesondere ein Wellendichtring und/oder ein O-Ring sein. Besonders bevorzugt ist die Dichtung jedoch eine Labyrinth-Dichtung, denn diese ist besonders verschleißarm.

Zweckmäßigerweise weist der Stator zumindest eine Pneumatik-Leitung auf, wobei das frei auslaufende Ende der Pneumatik-Leitung konzentrisch zur Rotationsachse angeordnet ist. Durch das Vorsehen einer Pneumatik-Leitung im Stator kann erreicht werden, dass prinzipiell die Königszapfenanordnung auch in der Lage ist, pneumatisch mit dem System des Zugfahrzeugs verbunden zu sein. Durch das konzentrische und/oder fluchtende Anordnen des frei auslaufenden Endes der Pneumatik-Leitung zur Rotationsachse kann erreicht werden, dass die zugfahrzeugseitige und die statorseitige pneumatische Leitung relativ zueinander drehen können und dennoch sicher Druckluft zwischen diesen beiden Leitungen übertragen werden kann. Um ein Austreten von Druckluft zu verhindern, ist der Spalt zwischen einer solchen statorseitigen Pneumatik-Leitung und einer zugfahrzeugseitigen Pneumatik-Leitung möglichst geringzuhalten und/oder erfordert das Anbringen eines Dichtelements.

In einer vorteilhaften Ausführungsform weist der Stator eine Vielzahl von Pneumatik-Leitungen auf, wobei die frei auslaufenden Enden der Pneumatik-Leitungen konzentrisch zueinander sind, wobei die frei auslaufenden Enden insbesondere konzentrisch zur Rotationsachse angeordnet sind. Durch das Vorsehen einer Vielzahl von Pneumatik-Leitungen ist es insbesondere möglich, nicht nur einen Druckluftstrom zwischen dem Zugfahrzeug und dem Anhänger vorzusehen. Hierdurch ist es beispielsweise möglich, ein Druckluftbremssystem auf dem Anhänger mittels des Druckluftsystems des Zugfahrzeugs über die Königszapfenanordnung zu versorgen und/oder eine Vielzahl von Verbrauchern mit Drucklust zu versorgen.

Bevorzugt weist der Steckverbinder zumindest sieben elektrische Kontakte auf. Durch das Vorsehen von zumindest sieben elektrischen Kontakten kann eine Vielzahl und/oder ein kompliziertes System wie insbesondere ein ABS-System mit Energie vom Zugfahrzeug über die Königszapfenanordnung versorgt werden. Daher resultiert eine besonders vielseitig verwendbare Königszapfenanordnung, wenn zumindest sieben elektrische Kontakte vorgesehen sind.

Vorteilhafterweise weist der Steckverbinder einen Führungsdorn auf. Durch Vorsehen eines Führungsdornes im Steckverbinder kann das Einstecken eines zugfahrzeugseitigen Steckerelements erleichtert werden, sodass insbesondere der Einsatz der Königszapfenanordnung in einem automatischen Kupplungssystem erfolgen kann.

Ein weiterer Aspekt der Erfindung kann ein Nutzfahrzeug, insbesondere einen Nutzfahrzeuganhänger, betreffen, welches(r) eine erfindungsgemäße Königszapfenanordnung aufweist.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungsformen eingesetzt werden, sofern dies nicht ausdrücklich ausgeschlossen wurde. Es zeigen:
- Figur 1: eine perspektivische Ansicht eines Teils einer Königszapfenanordnung;
- Figuren 2 und 3: weitere perspektivische Ansichten einer Königszapfenanordnung.

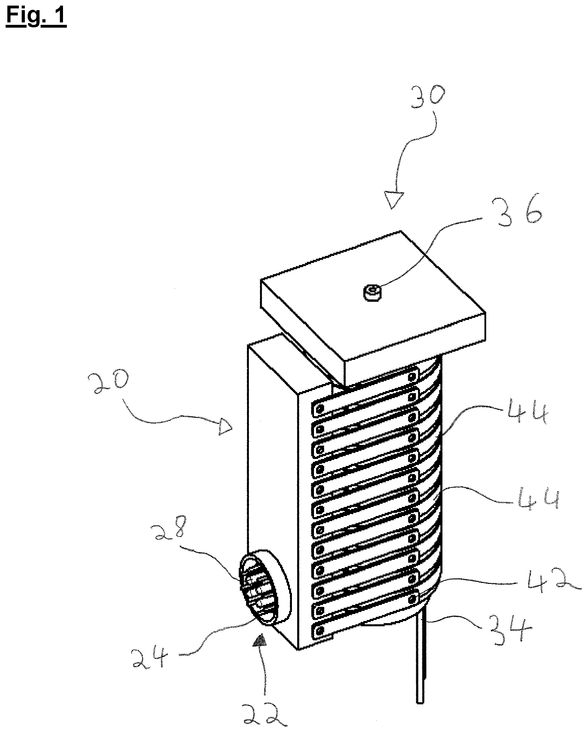

In **Figur 1** ist eine Königszapfenanordnung 1 gezeigt, welche über einen Rotor 20 und über einen Stator 30 verfügt. Der Rotor 20 weist einen Steckverbinder 22 auf, welcher wiederum über eine Vielzahl von Führungsdornen 24 und eine Vielzahl von elektrischen Kontakten 28 verfügt. Der Rotor 20 ist dabei in der dargestellten Ausführungsform komplett frei drehbar zum Stator 30 gelagert. Der Stator 30 weist einen Anschluss 34 auf, welcher zumindest in einem eingebauten Zustand energieleitend mit einem Verteilernetz eines Anhängers verbunden ist. Um eine Energieleitung von diesem Anschluss 34 zu den elektrischen Kontakten 28 des Steckverbinders 22 zu ermöglichen, verfügt die Königszapfenanordnung über eine Energieübertragungsvorrichtung 26. Diese Energieübertragungsvorrichtung 26 weist dabei rotorseitig eine Vielzahl von Schleifringen 44 auf. Die Schleifringe 44 weisen dabei in der in Figur 1 dargestellten Ausführungsform jeweils einen Mittelpunkt auf, der auf der Rotationsachse liegt und darüber hinaus sind die Schleifringe 44 auch axial zur Rotationsachse angeordnet. Um eine elektrische Energie von diesen Schleifringen 44 zu den elektrischen Kontakten 28 des Rotors 20 zu ermöglichen, verfügt der Rotor 20 über Stromabnehmer 42, welche innerhalb des Rotors 20 federnd gelagert sind. Die Stromabnehmer 42 kontaktieren dabei elektrisch leitend mittel- und/oder unmittelbar jeweils einen Schleifring 44, um eine Energieleitung von dem Steckverbinder 22, insbesondere dessen elektrischen Kontakten 28, zu dem Anschluss 34 zu erreichen.

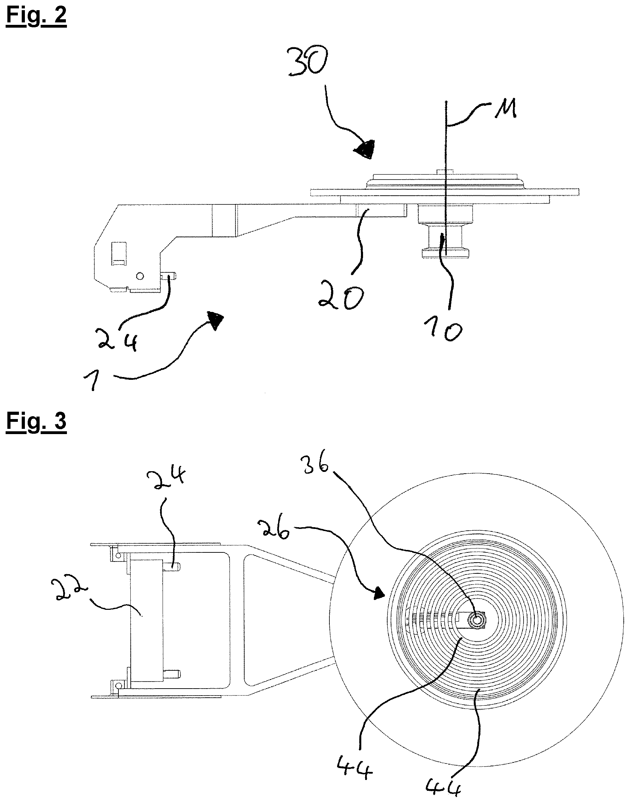

In **Figuren 2 und 3** sind weitere Ausführungsformen einer Königszapfenanordnung 1 gezeigt. In der Figur 2 ist dabei eine Seitenansicht einer Königszapfenanordnung 1 gezeigt und in der Figur 3 eine Draufsicht, wobei die in der Figur 2 gezeigte Ausführungsform prinzipiell zu der in der Figur 3 gezeigten Ausführungsform passen kann. Die Königszapfenanordnung 1 verfügt über einen Königszapfen 10, einen Stator 30 und einen Rotor 20. Der Rotor 20 verfügt über einen Energieanschluss 22 in Form eines Steckverbinders 22. Der Steckverbinder 22 weist zumindest einen Führungsdorn 24 auf. Der auf dem Stator 30 befindliche Anschluss 34 ist über eine Energieübertragungsvorrichtung 26 mit dem Energieanschluss 22 energieleitend verbunden. Die Energieübertragungsvorrichtung 26 verfügt über eine Vielzahl von Schleifringen 44. Diese Schleifringe 44 weisen dabei jeweils einen Mittelpunkt M auf. Die Mittelpunkte M der Schleifringe 44 liegen dabei sämtlich auf der Achse M, wie in der Figur 2 angedeutet. In der Mitte der Schleifringe 44 liegen eine Vielzahl von Pneumatik-Leitungen 36, deren frei auslaufenden Enden sind dabei konzentrisch zu der Rotationsachse angeordnet.

### Bezugszeichenliste:

- 1: - Königszapfenanordnung
- 10: - Königszapfen
- 20: - Rotor
- 22: - Energieanschluss
- 24: - Führungsdorn
- 26: - Energieübertragungsvorrichtung
- 28: - elektrischer Kontakt
- 30: - Stator
- 34: - Anschluss
- 36: - Pneumatik-Leitungen
- 42: - Stromabnehmer
- 44: - Schleifring
- M: - Mittelpunkt

## Patentansprüche

1. Königszapfenanordnung (1) zum Anordnen an einem Anhänger, insbesondere einem Nutzfahrzeuganhänger, umfassend
einen Königszapfen (10), einen Rotor (20) und einen Stator (30),
wobei der Königszapfen (10) sich in eine Erstreckungsrichtung erstreckt, wobei der Stator (30) insbesondere rotationsfest zum Königszapfen (10) angeordnet ist,
wobei der Rotor (20) einen als Steckverbinder ausgebildeten =nergieanschluss aufweist,
wobei der Steckverbinder dazu ausgelegt ist, mit einem komplementär ausgebildeten Steckelement eines Zugfahrzeugs verbindbar oder verbunden zu sein,
**dadurch gekennzeichnet, dass** der Stator (30) zumindest einen Anschluss (34) aufweist,
wobei der Anschluss (34) zumindest in einem eingebauten Zustand mit einem Verteilernetz des Anhängers verbunden ist,
wobei der Anschluss (34) über eine Energieübertragungsvorrichtung (26) mit dem Energieanschluss (22) energieleitend, insbesondere elektrisch leitend, verbunden ist, und
wobei der Rotor (20) relativ zum Stator (30) frei drehbar um eine Rotationsachse ist.

2. Königszapfenanordnung (1) gemäß Anspruch 1,
wobei die Rotationsachse koaxial zu der Erstreckungsrichtung des Königszapfen (10) ist.

3. Königszapfenanordnung (1) gemäß einem der vorhergehenden Ansprüche, wobei der Rotor (20) unverschieblich in Richtung der Rotationsachse und/oder senkrecht zu der Richtung der Rotationsachse, insbesondere am oder relativ zum Stator, gelagert ist.

4. Königszapfenanordnung (1) gemäß einem der vorhergehenden Ansprüche, wobei der Steckverbinder (22) eine Vielzahl von elektrischen Kontakten (28) aufweist,
wobei der Anschluss (34) eine Vielzahl von elektrischen Verbindern aufweist, wobei jeweils einen Kontakt (28) elektrisch leitend mit einem elektrischen Verbinder verbunden ist.

5. Königszapfenanordnung gemäß einem der vorhergehenden Ansprüche,
wobei der Rotor (20) oder der Stator (30) zumindest einen Stromabnehmer (42), insbesondere einen Bürstenabnehmer, aufweist,
wobei der Stator (30) oder der Rotor (20) zumindest einen Schleifring (44) aufweist,
wobei der Stromabnehmer elektrisch leitend den Schleifring (44) leitend mittelbar und/oder unmittelbar kontaktiert,
wobei der Schleifring (44) insbesondere relativ zum Stromabnehmer (42) frei drehbar ist.

6. Königszapfenanordnung gemäß Anspruch 5,
wobei jeder Schleifring (44) zumindest zwei Stromabnehmer (42) elektrisch leitend mittelbar und/oder unmittelbar kontaktiert,
welche vorteilhafterweise diametral gegenüberliegend angeordnet sind.

7. Königszapfenanordnung gemäß einem der Ansprüche 5 oder 6,
wobei der/die Stromabnehmer (42) den Schleifring (44) radial außen mittel und/oder unmittelbar elektrisch leitend kontaktieren.

8. Königszapfenanordnung gemäß einem der Ansprüche 5 bis 7,
wobei der Mittelpunkt (M) des Schleifrings (44), insbesondere aller Schleifringe, auf der Rotationsachse liegt.

9. Königszapfenanordnung gemäß einem der Ansprüche 5 bis 8,
wobei die Königszapfenanordnung eine Vielzahl von Schleifringen (44) aufweist,
wobei die Schleifringe (44) koaxial zu einander sind.

10. Königszapfenanordnung gemäß Anspruch 9,
wobei die Mittelpunkte (M) der Schleifringe (44) auf der Rotationsachse liegen, und
wobei die Schleifringe (44) axial und/oder radial zur Rotationsachse angeordnet sind.

11. Königszapfenanordnung gemäß einem der vorhergehenden Ansprüche,
wobei der Rotor (20) ein umgebendes Gehäuse aufweist, und/oder
wobei der Stator (30) ein Gehäuse aufweist.

12. Königszapfenanordnung gemäß einem der vorhergehenden Ansprüche,
wobei der Stator (30) zumindest eine Pneumatik-Leitung (36) aufweist,
wobei das freiauslaufende Ende der Pneumatik-Leitung (36) konzentrisch zur Rotationsachse angeordnet ist.

13. Königszapfenanordnung gemäß Anspruch 12,
wobei der Stator (30) eine Vielzahl von Pneumatik-Leitungen (36) aufweist, wobei die frei auslaufenden Enden der Pneumatik-Leitungen (36) insbesondere konzentrisch zueinander sind, und/oder
wobei die frei auslaufenden Enden der Pneumatik -Leitungen (36) insbesondere konzentrisch zur Rotationsachse angeordnet sind.

14. Königszapfenanordnung gemäß einem der vorhergehenden Ansprüche, wobei der Steckverbinder (22) zumindest sieben elektrische Kontakte (28) aufweist.

15. Königszapfenanordnung gemäß einem der vorhergehenden Ansprüche, wobei der Steckverbinder (22) einen Führungsdorn (24) aufweist.

## Claims

1. King pin assembly (1) for mounting on a trailer, in particular a commercial vehicle trailer, comprising
a king pin (10), a rotor (20) and a stator (30),
wherein the king pin (10) extends in an extension direction,
wherein the stator (30) is arranged in particular rotationally fixed to the king pin (10),
wherein the rotor (20) has an energy connection in the form of a plug connector,
wherein the plug connector is designed to be connectable or connected to a complementary plug element of a towing vehicle,
**characterised in that** the stator (30) has at least one connector (34), wherein the connection (34) is connected to a distribution network of the trailer at least in an installed state,
wherein the connection (34) is connected in an energy-conducting, in particular electrically conducting, manner to the energy connection (22) via an energy transmission device (26), and
wherein the rotor (20) is freely rotatable relative to the stator (30) about an axis of rotation.

2. King pin assembly (1) according to claim 1,
wherein the axis of rotation is coaxial with the direction of extension of the king pin (10).

3. King pin assembly (1) according to any one of the preceding claims,
wherein the rotor (20) is mounted non-displaceably in the direction of the axis of rotation and/or perpendicular to the direction of the axis of rotation, in particular on or relative to the stator.

4. King pin assembly (1) according to any one of the preceding claims,
wherein the connector (22) has a plurality of electrical contacts (28),
wherein the connection (34) has a plurality of electrical connectors,
wherein each contact (28) is electrically conductively connected to an electrical connector.

5. King pin assembly according to any one of the preceding claims,
wherein the rotor (20) or the stator (30) comprises at least one current collector (42), in particular a brush collector,
wherein the stator (30) or the rotor (20) comprises at least one slip ring (44), wherein the current collector makes conductive and/or direct contact with the slip ring (44),
wherein the slip ring (44) is freely rotatable, in particular relative to the current collector (42).

6. King pin assembly according to claim 5,
wherein each slip ring (44) contacts at least two current collectors (42) in an electrically conductive indirect and/or direct manner,
which are advantageously arranged diametrically opposite.

7. King pin assembly according to any one of claims 5 or 6,
wherein the current collector(s) (42) contact(s) the slip ring (44) radially outwardly indirectly and/or directly in an electrically conductive manner.

8. King pin assembly according to any one of claims 5 to 7,
wherein the centre (M) of the slip ring (44), in particular of all slip rings, lies on the axis of rotation.

9. King pin assembly according to any one of claims 5 to 8,
wherein the kingpin assembly comprises a plurality of slip rings (44), wherein the slip rings (44) are coaxial with each other.

10. King pin assembly according to claim 9,
wherein the centres (M) of the slip rings (44) lie on the axis of rotation, and wherein the slip rings (44) are arranged axially and/or radially to the axis of rotation.

11. King pin assembly according to any one of the preceding claims,
wherein the rotor (20) comprises a surrounding housing, and/or
wherein the stator (30) comprises a housing.

12. King pin assembly according to any one of the preceding claims,
wherein the stator (30) comprises at least one pneumatic conduit (36),
wherein the free running end of the pneumatic conduit (36) is arranged concentrically to the axis of rotation.

13. King pin assembly according to claim 12,
wherein the stator (30) comprises a plurality of pneumatic lines (36), wherein the freely extending ends of the pneumatic lines (36) are particularly concentric with each other, and/or
wherein the freely extending ends of the pneumatic lines (36) are arranged in particular concentrically to the axis of rotation.

14. King pin assembly according to any one of the preceding claims,
wherein the connector (22) has at least seven electrical contacts (28).

15. King pin assembly according to any one of the preceding claims, wherein the connector (22) comprises a guide pin (24).

## Revendications

1. Ensemble de pivot central (1) destiné à être monté sur une remorque, en particulier une remorque de véhicule utilitaire, comprenant
un pivot central (10), un rotor (20) et un stator (30),
le pivot central (10) s'étendant dans une direction d'extension,
le stator (30) étant disposé en particulier solidairement en rotation par rapport au pivot central (10),
le rotor (20) présentant un raccordement d'énergie réalisé sous forme de connecteur enfichable,
le connecteur enfichable étant conçu pour être relié ou pouvoir être relié à un élément d'enfichage, réalisé de façon complémentaire, d'un véhicule tracteur,
**caractérisé en ce que**
le stator (30) présente au moins un raccordement (34),
le raccordement (34) étant relié, au moins à l'état monté, à un réseau de distribution de la remorque,
le raccordement (34) étant relié au raccordement d'énergie (22) par un dispositif de transmission d'énergie (26) de manière à conduire l'énergie, en particulier de manière électriquement conductrice, et
le rotor (20) pouvant tourner librement autour d'un axe de rotation par rapport au stator (30).

2. Ensemble de pivot central (1) selon la revendication 1,
dans lequel l'axe de rotation est coaxial à la direction d'extension du pivot central (10).

3. Ensemble de pivot central (1) selon l'une des revendications précédentes,
dans lequel le rotor (20) est monté de façon immobile en translation dans la direction de l'axe de rotation et/ou perpendiculairement à la direction de l'axe de rotation, en particulier sur le stator ou par rapport à celui-ci.

4. Ensemble de pivot central (1) selon l'une des revendications précédentes,
dans lequel le connecteur enfichable (22) comprend une pluralité de contacts électriques (28),
le raccordement (34) comporte une pluralité de connecteurs électriques,
un contact respectif (28) est relié de manière électriquement conductrice à un connecteur électrique.

5. Ensemble de pivot central selon l'une des revendications précédentes,
dans lequel le rotor (20) ou le stator (30) comporte au moins un collecteur de courant (42), en particulier un collecteur à balais,
le stator (30) ou le rotor (20) comporte au moins une bague collectrice (44),
le collecteur de courant est directement et/ou indirectement en contact électriquement conducteur avec la bague collectrice (44),
en particulier, la bague collectrice (44) peut tourner librement par rapport au collecteur de courant (42).

6. Ensemble de pivot central selon la revendication 5,
dans lequel chaque bague collectrice (44) est directement et/ou indirectement en contact électriquement conducteur avec au moins deux collecteurs de courant (42), qui sont avantageusement disposés de manière diamétralement opposée.

7. Ensemble de pivot central selon l'une des revendications 5 ou 6,
dans lequel le ou les collecteurs de courant (42) sont directement et/ou indirectement en contact électriquement conducteur avec la bague collectrice (44) radialement à l'extérieur.

8. Ensemble de pivot central selon l'une des revendications 5 à 7,
dans lequel le centre (M) de la bague collectrice (44), en particulier de toutes les bagues collectrices, est situé sur l'axe de rotation.

9. Ensemble de pivot central selon l'une des revendications 5 à 8,
dans lequel l'ensemble de pivot central comprend une pluralité de bagues collectrices (44),
les bagues collectrices (44) sont coaxiales entre elles.

10. Ensemble de pivot central selon la revendication 9,
dans lequel les centres (M) des bagues collectrices (44) sont situés sur l'axe de rotation, et
les bagues collectrices (44) sont disposées axialement et/ou radialement par rapport à l'axe de rotation.

11. Ensemble de pivot central selon l'une des revendications précédentes,
dans lequel le rotor (20) comprend un boîtier qui l'entoure, et/ou le stator (30) comprend un boîtier.

12. Ensemble de pivot central selon l'une des revendications précédentes,
dans lequel le stator (30) comporte au moins un conduit pneumatique (36), l'extrémité libre du conduit pneumatique (36) est disposée concentriquement à l'axe de rotation.

13. Ensemble de pivot central selon la revendication 12,
dans lequel le stator (30) comprend une pluralité de conduits pneumatiques (36),
les extrémités libres des conduits pneumatiques (36) sont en particulier concentriques entre elles, et/ou
les extrémités libres des conduits pneumatiques (36) sont disposées en particulier concentriquement à l'axe de rotation.

14. Ensemble de pivot central selon l'une des revendications précédentes,
dans lequel le connecteur (22) comprend au moins sept contacts électriques (28).

15. Ensemble de pivot central selon l'une des revendications précédentes, dans lequel le connecteur enfichable (22) comporte un mandrin de guidage (24).
